## Europäisches Patentamt

## European Patent Office

## Office européen des brevets

(11) Publication number: **0 039 541**
A1

## EUROPEAN PATENT APPLICATION

(21) Application number: 81301370.3

(22) Date of filing: 30.03.81

(51) Int. Cl.³: **F 16 D 35/00**, F 01 P 7/04

(30) Priority: 03.05.80 GB 8014906

(43) Date of publication of application: 11.11.81 Bulletin 81/45

(84) Designated Contracting States: **DE FR GB IT SE**

(71) Applicant: HOLSET ENGINEERING COMPANY LIMITED, P.O. Box A9, Turnbridge Huddersfield, HD1 6RD (GB)

(72) Inventor: Ellis, Norman, 6 Westmoor View Honley, Huddersfield West Yorkshire (GB)

(74) Representative: Huntingford, David Ian et al, W.P. THOMPSON & CO. Coopers Building Church Street, Liverpool L1 3AB (GB)

(54) Improvements in and relating to viscous fluid coupling devices.

(57) A driven member for a viscous shear fluid coupling has a housing part which comprises a spider member (21) of steel or other ferrous metal having an annular centre boss (25) with a bore which receives a journal bearing (15). The spider member (21) hat a plurality of radially extending arms (29). A step (16) on each of the radially extending arms (29) acts as a location spigot for a fan or other driven device. The radially outer end of each of the arms (29) terminates in a respective boss (33) which extends in a direction parallel to the spider and coupling axis. An annular disc member (23) is fixed co-axially to the spider member (21). The annular steel disc member (21) has a bore (39) of smaller diameter than the bore (27) of the spider member centre boss (29) and an outer periphery attached to a cover part (19). A respective threaded stud is located in the bore (33) of each boss (31) at the termination of each radial arm (29). The studs (18) are fixed to the annular disc member (23) or to the spider member (21).

- 1 -

DESCRIPTION

"IMPROVEMENTS IN AND RELATING TO VISCOUS FLUID

COUPLING DEVICES"

The present invention relates to torque transmitting viscous shear fluid couplings and in particular to the driven members of such couplings.

Such couplings are well known and their construction and operation have been described in numerous patents. The couplings may be either simple torque limiting devices as described in British Patent 898,441, in which torque is transmitted from a driving member to a driven member by means of a viscous fluid permanently located between opposed shear surfaces on each of the two members, or more complex devices which include temperature responsive means whereby the viscous fluid is selectively positioned either between the opposed shear surfaces on the two members or in a reservoir area to leave the opposed shear surfaces free of fluid dependent upon the temperature external to the coupling. The latter couplings afford a greater degree of control over the r.p.m. of the driven member. Typical of such couplings are those described in British Patents 898,442 and 1,540,708.

Generally, simple torque limiting couplings include a rotatable driving member and a driven member, the driving member including a shaft portion adapted for attachment to a source of power, usually an accessory drive shaft of an internal combustion engine such as a water pump shaft, and a driving disc fixed for rotation co-axially with the shaft portion, the driving disc being mounted for co-axial rotation within a working chamber in the driven member. The driven member typically includes a housing part journalled by suitable bearing means for co-axial rotation about the shaft portion of the driving member and a cover part fixed co-axially to the housing part, the housing and cover parts together defining the working chamber.

In the more complex temperature responsive devices, the driven member additionally includes a separator plate mounted internally and co-axially therewith to divide the driven member into a working chamber and a reservoir space and temperature responsive means for selectively directing the viscous fluid within the coupling either into the working chamber or into the reservoir space.

Heat is generated during operation in both types of coupling as a result of the shearing action on the viscous fluid therein and it is customary to make the housing part or alternatively both the housing and cover parts from suitably finned aluminium or other light alloy die castings to dissipate the heat generated to the surrounding atmosphere and thus prevent overheating of the coupling. Problems are, however, inherent in the use of aluminium or light alloy die castings for such parts. Firstly, the high thermal expansion associated with such materials results in wide variations in the dimensions of the housing. Particularly troublesome are the location diameter for the ball or needle roller bearing means by which the housing member is journalled on the driving shaft and the location diameter used for mounting the device to be driven by the coupling, usually the cooling fan of the internal combustion engine. The complex shape of such housings also necessitates the use of expensive dies and tooling.

It is an object of the present invention to provide a driven member for either a torque limiting or a temperature responsive viscous shear coupling that overcomes the large dimensional variations associated with the previous driven members which included die cast housing members.

It is also an object of the invention to provide such a driven member in which the housing member is cheap to construct.

According to the present invention there is provided a driven member for a viscous shear fluid coupling of either the torque limiting or temperature responsive type, in which the housing part comprises a spider member of steel or other ferrous metal having an annular centre boss with a bore adapted to receive a coupling journal bearing means, a plurality of radially extending arms, a location spigot for a fan or other driven device co-axial with the centre boss and formed as a step on each of said radially extending arms, the radially outer end of each of said arms terminating in a respective boss having a bore formed therein which extends in a direction parallel to the spider and coupling axis; an annular steel disc member having a bore of smaller diameter than the bore of said spider member centre boss and an outer periphery adapted for attachment to a coupling cover member, said annular disc member being fixed co-axially to said spider member; and a respective threaded stud located in the bore of each boss at the termination of each radial arm, said studs being fixed to the annular disc member or to the spider member.

The spider member is preferably of sintered material.

The invention will now be described, by way of example only, with reference to the accompanying drawings, in which:-

Figure 1 is a cross-sectional view of a fluid coupling device according to the present invention;

Figure 1a shows a detail of Fig. 1 to a larger scale;

Figure 2 is a front elevation of the coupling of Figure 1;

Figure 3 is a front elevation of the coupling of Figure 1 with the bearing bracket removed;

Figure 4 is a scrap view of one face of the working chamber in the direction of arrow A in Figure 1; and

Figure 5 is an end view of the housing in the direction A.

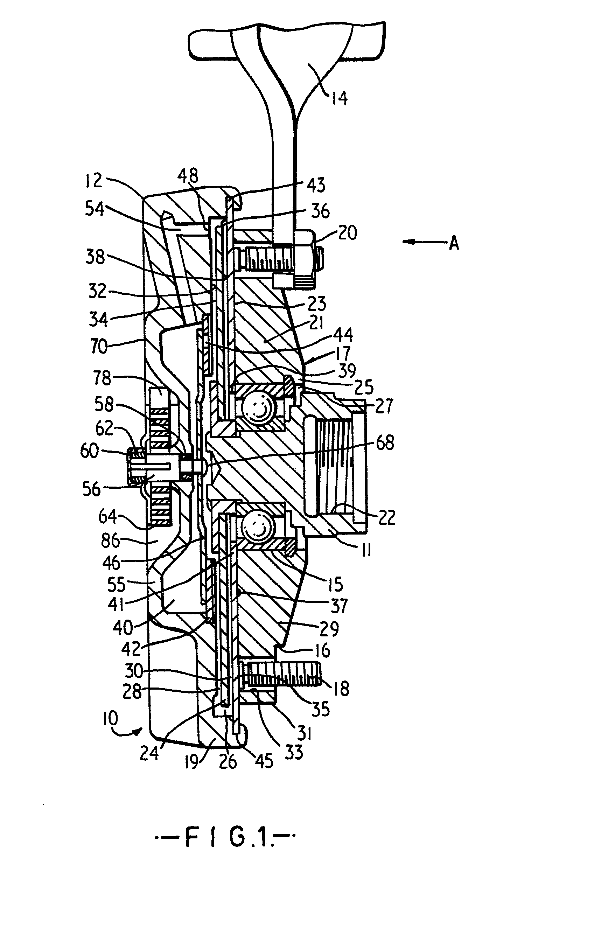

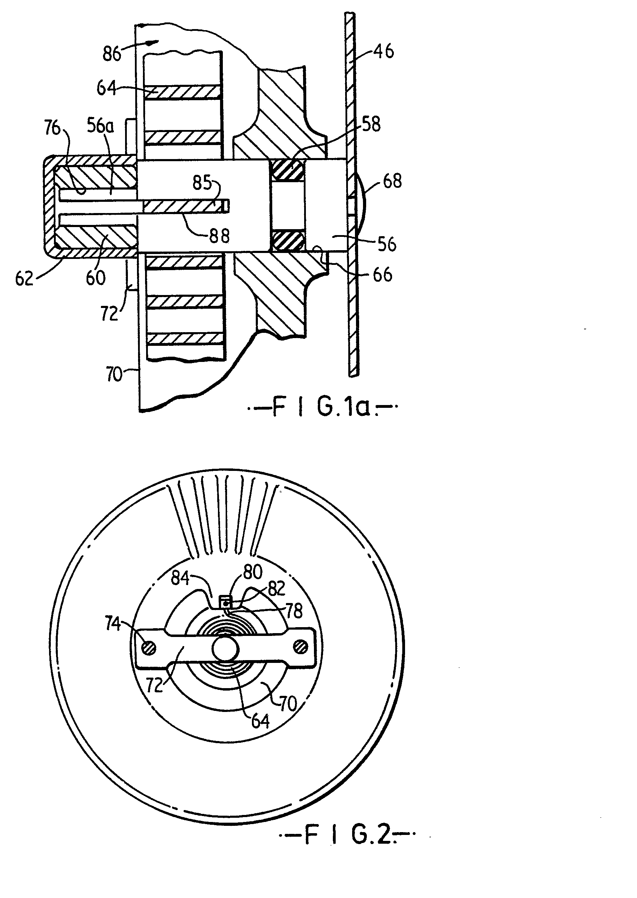

Referring now to the drawings, Figure 1 illustrates a torque transmitting viscous shear fluid coupling of the temperature responsive type generally designated 10 which contains a viscous working fluid (not shown) and includes a driving member 11 and a driven member 12, the driven member being journalled for co-axial rotation with the driving member by means of a bearing 15.

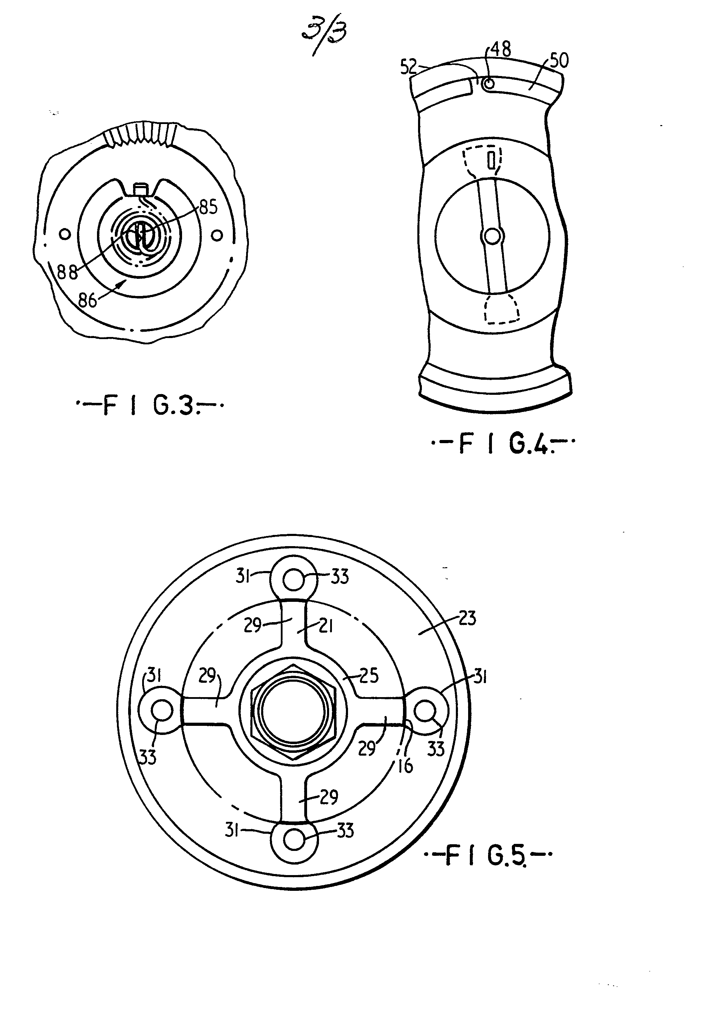

The driven member 12 includes a housing member generally designated 17 and a cover member 19. The housing member 17 comprises a sintered steel spider member 21 and an annular steel disc member 23 fixed for co-axial rotation therewith. The spider member (see Fig. 5) has an annular centre boss 25 having a bore 27 dimensioned to receive the bearing 15 and a plurality of radially extending arms 29 formed integrally with the centre boss 25. Each radial arm 29 includes at its outer end a boss 31 having a bore 33. Formed by means of a step in each radial arm is a spigot location diameter 16 adapted to locate the fan or fan blades 14 or other driven device co-axially with the driving member 11. The fan or fan blades 14 is fixed by means of studs 18 and nuts 20 to the driven member 12. The studs 18 are fixed to the annular disc member 23 at 35 for example by welding, preferably projection welding, each stud passing through a respective bore 33 in an arm 29 of the spider member 21. The annular disc member 23 and the spider member 21 may similarly be fixed to each other by welding, preferably projection welding through the arms as at 37. Alternatively, the studs 18 may be fixed to the housing member 17 by providing the inner ends of the bores 33 with a thread and by providing a corresponding thread on the inner ends of the studs. The bore 39 of the annular disc member 23 is made smaller than the bore 27 of the spider member 21 thereby forming an abutment 41 for axial location of the driven member 12 against the bearing 15. The outer margin 43 of the annular disc member is attached to the cover member 19 at 45. The means of attachment may be by rolling an annular flange formed on the cover member over the outer margin of the annular disc member 23 as illustrated in Figure 1 but other means such as screws may also be used.

The driving member 11 includes a threaded bore 22 for connection to a source of rotational energy (not shown). A drive disc 24 which forms part of the driving member 11 is enclosed within a working chamber 26 formed as part of the driven member 12 and defining shear spaces 28 and 30 between the opposing faces 32, 34 and 36, 38 of the working chamber 26 and drive disc 24. The working chamber 26 is separated from a reservoir 40 by means of a valve plate 42 containing a valve port 44. A rotary valve member 46 is provided to open or close the valve port 44. Adjacent to the periphery of the drive disc 24 there is provided an outlet port 48 in the wall 32 of the working chamber connected by ducts 54 to the reservoir 40. The outlet port 48 is provided with a scoop member 52 (Fig. 4) formed by a blocked groove 50 formed in the face 32 of the working chamber 26. The wall 55 of the driven member defines the front wall of the reservoir and includes an aperture 66 for locating a valve shaft 56. As shown most clearly in Fig. 1a, the valve shaft is attached rigidly to the valve arm by rivetting or staking for rotation therewith at 68. A suitable seal 58 is provided to prevent leakage of fluid from the reservoir 40. A bracket member 72 (Fig. 2) is fixed to the front face 70 of the driven member by means of screws or other suitable fastening means such as rivets at 74. Formed in the centre of the bracket is a cup 62 adapted to receive a bearing 60 having a bore 76 for supporting and journalling the outboard end 56a of the valve shaft 56. Angular rotation of the valve member 46 to open or close the valve port 44 is controlled by a temperature responsive bi-metal coil 64 located in a recess 86 in the front wall of the coupling driven member 12. The bi-metal coil includes a first straight tang 78 which is fixed resiliently to the driven member by means of an elastomeric sleeve 82 fitted tightly over the tang 78, the combined tang and sleeve being an interference fit in a slot 80 formed in a boss 84 within the recess 86. The slot 80 may be conveniently cast in the boss 84 as any casting draft angle can be readily accommodated by the elastomeric sleeve 82. The bi-metal coil further includes a second straight tang 85 (Fig. 3) which is fitted closely into a slot 88 in the valve shaft 56 to impart rotational movement thereto upon changes in temperature ambient to the bi-metal coil.

In operation the driving member 11 is driven by means of an accessory drive shaft of an internal combustion engine, usually the water pump drive shaft, shear resistance of the viscous fluid in the working chamber 26 causing the driven member 12 to rotate at an r.p.m. that is somewhat lower than the r.p.m. of the driven member. By virtue of the difference in r.p.m. between the driving disc 24 and the driven member 12 viscous fluid is gathered by the scoop 52 and passes through ducts 54 into the reservoir 40. As long as the temperature externally of the coupling is above a predetermined limit the temperature responsive bi-metal coil 64 maintains the rotary valve member 46 in a position in which the valve port 44 remains open. Fluid from the reservoir 40 therefore passes through the valve port 44 into the working chamber 26 whereby sufficient fluid is maintained within the working spaces 28 and 30 to establish a maximum r.p.m. of the driven member. When the temperature externally of the coupling drops below a pre-determined limit the temperature responsive bi-metal coil 64 moves the rotary valve member 46 into a position in which the valve port 44 is closed thereby preventing fluid flowing from the reservoir 40 to the working chamber 26. The scoop 52 however continues to pass fluid from the working chamber 26 thereby emptying the working chamber and shear spaces 28 and 30 of viscous fluid and hence reducing the degree of drive between the driving member 12 and driven member 11. The r.p.m. of the driven member then falls until it is substantially free-wheeling around the driving member with very little drive being transmitted. When the temperature again rises the temperature responsive bi-metal coil 64 moves the valve member 46 into a position in which the valve port 44 is open thereby allowing fluid to pass from the reservoir 40 to the working chamber 26 and shear spaces 28, 30. The amount of fluid in the shear spaces 28, 30 gradually increases until the maximum drive condition is re-established and the r.p.m. of the driven member rises to a maximum.

0039541

## CLAIMS

1. A driven member for a viscous shear fluid coupling of either the torque limiting or temperature responsive type comprising a housing part (17) journalled for coaxial rotation about a shaft portion of the driving member (11) and a cover part (19) fixed co-axially to the housing part (17), the housing and cover parts (17, 19) together defining a working chamber (26), characterised in that the housing part (17) comprises a spider member (21) of steel or other ferrous metal having an annular centre boss (25) with a bore (27) adapted to receive a journal bearing (15), a plurality of radially extending arms (29) and a location spigot (16) for a fan or other driven device (14) co-axial with the centre boss (25) and formed as a step on each of the radially extending arms (29), the radially outer end of each of the arms (29) terminating in a respective boss (31) having a bore (33) formed therein which extends in a direction parallel to the spider and coupling axis; an annular steel disc member (23) having a bore (39) of smaller diameter than the bore (27) of the spider member centre boss (29) and an outer periphery adapted for attachement to the cover part (19), the annular disc member (23) being fixed co-axially to the spider member (21); and a respective threaded stud (18) located in the bore (33) of each boss (31) at the termination of each radial arm (29), the studs (18) being fixed to the annular disc member (23) or to the spider member (21).

2. A driven member as claimed in claim 1, characterised in that the studs (18) are welded to the annular disc (23) at the bases of the bores (33).

3. A driven member as claimed in claim 2, characterised in that the studs (18) are projection welded to the annular disc (23) at the bases of the bores (33).

4. A driven member as claimed in claim 1, 2 or 3, characterised in that the annular disc (23) and the spider member (21) are welded to each other in the region of the radially extending arms (29).

5. A driven member as claimed in claim 4, characterised in that the annular disc (23) and the spider member (21) are projection welded to each other in the region of the radially extending arms (29).

6. A driven member as claimed in claim 1, characterised in that the bases of the studs (18) are screw-threaded and received in correspondingly screw-threaded portions at the inner ends of the bores (33) in the bosses (31).

7. A driven member as claimed in any one of the preceding claims, characterised in that the spider member is of a sintered material.

1/3

-FIG.1.-

—F I G.1a—

—F I G.2—

—F I G.3.—

—F I G.4.—

—F I G.5.—

## DOCUMENTS CONSIDERED TO BE RELEVANT

| Category | Citation of document with indication, where appropriate, of relevant passages | Relevant to claim |
|---|---|---|
| A | GB - A - 2 028 470 (CHRYSLER) | 1 |
| A | FR - A - 2 364 365 (EATON) | 1 |
| A | US - A - 3 809 197 (CLANCEY) | 1 |

--------

**CLASSIFICATION OF THE APPLICATION (Int. Cl.³)**

F 16 D 35/00
F 01 P 7/04

**TECHNICAL FIELDS SEARCHED (Int. Cl.³)**

F 16 D 35/00
F 01 P 7/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 22.05.1981 | WEBER |

EPO Form 1503.1   06.78